# EUROPÄISCHE PATENTSCHRIFT

(11) **EP 3 201 774 B1**
(45) Veröffentlichungstag und Bekanntmachung des Hinweises auf die Patenterteilung: **20.02.2019**
(21) Anmeldenummer: 15781854.3
(22) Anmeldetag: 28.09.2015
(51) Int. Cl.: G06F 11/07

(54) **VERTEILTES ECHTZEITCOMPUTERSYSTEM UND ZEITGESTEUERTE VERTEILEREINHEIT**
DISTRIBUTED REAL-TIME COMPUTER SYSTEM AND TIME-CONTROLLED DISTRIBUTION UNIT
SYSTÈME INFORMATIQUE EN TEMPS RÉEL RÉPARTI ET UNITÉ DE RÉPARTITION À COMMANDE TEMPORELLE

(30) Priorität: 01.10.2014 AT 506972014
(43) Veröffentlichungstag der Anmeldung: 09.08.2017
(73) Patentinhaber: TTTech Computertechnik AG, 1040 Wien (AT)
(72) Erfinder: POLEDNA, Stefan, A-3400 Klosterneuburg (AT); KOPETZ, Hermann, A-2500 Baden (AT)
(74) Vertreter: Patentanwaltskanzlei Matschnig & Forsthuber OG
(86) Internationale Anmeldenummer: PCT/AT2015/050238
(87) Internationale Veröffentlichungsnummer: WO 2016/049670

(56) Entgegenhaltungen:
- WO-A1-2013/123543
- HERMANN KOPETZ ET AL: "The Time-Triggered Architecture", PROCEEDINGS OF THE IEEE, IEEE. NEW YORK, US, Bd. 91, Nr. 1, 1. Januar 2003 (2003-01-01) , XP011065101, ISSN: 0018-9219

## Beschreibung

Die Erfindung bezieht sich auf eine zeitgesteuerte Verteilereinheit zur Verteilung von Nachrichten in einem verteilten Computersystem für sicherheitskritische Anwendungen.

Ebenso bezieht sich die Erfindung auf ein verteiltes Echtzeit-Computersystem bestehend aus einer Vielzahl von Knotenrechnern und zeitgesteuerten Verteilereinheiten.

Mit dem Vordringen der Computertechnik in sicherheitskritische Anlagen, z.B. im Bereich des autonomen Fahrens von Kraftfahrzeugen, müssen systemtechnische Vorkehrungen getroffen werden, die nach dem Auftreten eines Fehlers in einem Knotenrechner entweder die Folgen des Fehlers eliminieren oder die Anlage automatisch in einen sicheren Zustand führen. Bei einem autonomen Kraftfahrzeug ist ein sicherer Zustand z.B. der angehaltene Zustand des Fahrzeuges.

Entsprechend dem Stand der Technik wird die Steuerung einer sicherheitskritischen Anlage durch ein verteiltes Computersystem vorgenommen. Ein verteiltes Computersystem besteht aus einer Vielzahl von Knotenrechnern die über mindestens eine Verteilereinheit Nachrichten austauschen.

Im Folgenden wird angenommen dass alle Knotenrechner und alle Verteilereinheiten Zugriff auf eine globale Zeit haben. Entsprechend dem Stand der Technik [Kopetz, H., Real-time Systems-Design Principles for Distributed Embedded Applications. Springer Verlag, 2011] kann eine fehlertolerante globale Zeit vom Kommunikationssystem aufgebaut werden.

Im Folgenden und im Rahmen dieser Beschreibung werden Begriffe verwendet, die zwar auf diesem Fachgebiet und in der Literatur bekannt sind, jedoch zur leichteren Lesbarkeit nachstehend definiert werden. Mit dem Überbegriff "Komponente" wird ein Knotenrechner oder eine Verteilereinheit bezeichnet. Eine Komponente ist eine "Fault-Containment Unit" (FCU), wenn die unmittelbaren Folgen einer Fehlerursache ausschließlich auf diese Komponente beschränkt bleiben [Kopetz, s.o., Seite 137]. Die mittelbaren Folgen eines Fehlers einer FCU in einem verteilten Computersystem sind der Ausfall einer erwarteten Nachricht oder eine fehlerhafte Nachricht. Eine FCU, die im Fehlerfall keine Nachricht sendet, bezeichnet man als selbstprüfende FCU (self-checking FCU, abgekürzt SCFCU oder fail-silent FCU). Eine selbstprüfende FCU sendet daher entweder richtige oder keine Nachrichten. Eine FCU, die im Fehlerfall eine im Zeitbereich oder Wertebereich fehlerhafte Nachricht senden kann, bezeichnet man als nicht selbstprüfende FCU (non self-checking FCU, abgekürzt NSCFCU oder non fail-silent FCU). Eine nicht selbstprüfende FCU kann daher im Fehlerfall falsche Nachrichten im Wertebereich oder im Zeitbereich senden.

Der Aufbau eines fehlertoleranten Systems wird wesentlich erleichtert, wenn alle Knotenrechner als selbstprüfende FCUs ausgebildet sind [Kopetz, s.o., Seite 156]. Da eine selbstprüfende FCU nur richtige oder keine Nachrichten sendet, genügt es, um einen Ausfall einer selbstprüfenden FCU zu maskieren, eine zweite parallel arbeitende selbstprüfende FCU vorzusehen, wobei beide selbstprüfende FCUs die gleichen Eingabedaten erhalten. Im fehlerfreien Fall werden von den beiden selbstprüfenden FCUs zwei richtige Nachrichten produziert. Wenn eine selbstprüfende FCU ausfällt, wird noch immer eine richtige Nachricht produziert.

Eine Möglichkeit, eine selbstprüfende FCU zu realisieren, die nach dem Auftreten eines Hardwarefehlers keine Nachricht sendet, besteht in der parallelen Berechnung des Resultats durch zwei redundante identische Baueinheiten und dem anschließenden Vergleich der Resultate. Wenn sich die Resultate der beiden parallel angeordneten Baueinheiten unterscheiden, so wird kein Resultat (keine Nachricht) an die Umgebung ausgegeben. Der technische Aufwand zur Realisierung einer solchen selbstprüfenden FCU ist jedoch mehr als doppelt so groß wie der Aufwand zur Realisierung einer nicht selbstprüfenden FCU.

Eine Möglichkeit, eine selbstprüfende FCU zu realisieren, die Softwarefehler erkennt, besteht in der parallelen Anordnung von zwei FCUs mit unterschiedlicher Software, der die gleiche Aufgabenstellung zu Grunde liegt, und dem Vergleich der Resultate (Softwarediversität). Wenn sich die Resultate der beiden parallel angeordneten FCUs unterscheiden, so wird kein Resultat (keine Nachricht) an die Umgebung ausgegeben. Der technische Aufwand zur Realisierung einer solchen selbstprüfenden FCU ist mehr als doppelt so groß wie der Aufwand zur Realisierung einer nicht selbstprüfenden FCU.

Wenn die Software, die in einer FCU eingesetzt wird, so einfach ist, dass sie formal überprüft und/oder umfassend getestet werden kann, so ist die Annahme gerechtfertigt, dass Entwurfsfehler im Betrieb nicht auftreten können. Eine Software, die formal überprüft und/oder umfassend getestet werden kann, wird als "einfache" Software und ein mittels einer "einfachen" Software errechnetes Resultat als "einfaches" Resultat bezeichnet. Wenn in einer FCU "einfache" Software zum Einsatz kommt, so muss eine selbstprüfende FCU nur auftretende Hardwarefehler erkennen.

Im Bereich der Sicherheitstechnik wird unter der "Umhüllung" (engl. envelope: the technical limits within which an electronic system may be safely operated [Kariger, B, Fierro, D. Dictionary.com. URL: http://dictionary.reference.com]) eines "einfachen" Resultats die Menge aller Resultate verstanden, die alle sicherheitskritischen Kriterien erfüllen und eine Lösung der gestellten Aufgabe gewährleisten.

Wenn die Software, die in einer FCU eingesetzt wird, nicht formal überprüft und/oder umfassend getestet werden kann, so ist die Annahme gerechtfertigt, dass Entwurfsfehler während des Betriebs auftreten können. Eine Software, die nicht formal überprüft oder umfassend getestet werden kann, wird als "komplexe" Software und ein mittels einer komplexen Software errechnetes Resultat als "komplexes" Resultat bezeichnet.

Im Bereich der Sicherheitstechnik in der Luft und Raumfahrt ist die Unterscheidung von "einfach" (simple) und "komplex" (complex) in dem FAA Advisor Circular AC No: 23.1309-1D [Jan 16, 2009. URL: www.faa-aircraft-certification.com/supportfiles/ac-23-1309-1d.pdf] genau erklärt.

Wenn in einem sicherheitsrelevanten System "komplexe" Software zum Einsatz kommt, so muss eine selbstprüfende FCU nicht nur auftretende Hardwarefehler sondern auch Softwarefehler erkennen, die zu einer Verletzung eines sicherheitsrelevanten Kriteriums führen können. In einer sicherheitsrelevanten Anwendung müssen im Rahmen der Systemanalyse die anwendungsspezifischen sicherheitsrelevanten Kriterien erfasst und präzise dokumentiert werden. Zum Beispiel darf bei einer durch einen Computer kontrollierten Bestrahlungsbehandlung eines Patienten eine maximale Dosis niemals überschritten werden [Jacky, Johnatan. Safety-Critical Computing: Hazards, Practices, Standards, and Regulations. in: Computerization and Controversy: Value Conflicts and Social Choices. Ed. Kling R. pp.: 767-792. Academic Press. 1996.].

Die fehlerhafte Nachricht einer nicht selbstprüfenden FCU kann entweder im Wertebereich fehlerhafte Nutzinformationen (engl. payload) enthalten oder im Zeitbereich fehlerhaft sein, d.h. zu einem falschen Zeitpunkt eintreffen.

In einem zeitgesteuerten System, in dem jede Nachrichtfolge eines Knotenrechners zu einer Verteilereinheit aus periodischen Nachrichten besteht, die zu festgelegten Zeitpunkten, die der Verteilereinheit a priori bekannt gegeben wurden, bei der Verteilereinheit eintreffen soll, kann die Verteilereinheit eine zu einem fehlerhaften Zeitpunkt von einer nicht selbstprüfenden FCU eintreffende Nachricht erkennen und verwerfen.

Da eine im Zeitbereich fehlerhafte Nachricht einer nicht selbstprüfenden FCU von einer zeitgesteuerten Verteilereinheit erkannt und verworfen wird, erscheint diese nicht selbstprüfende FCU, aus der Sicht des die Nachricht von einer Verteilerheinheit empfangenden Knotenrechners als selbstprüfende FCU in Bezug auf im Zeitbereich fehlerhafte Nachrichten.

Mit "Komparator" wird im Rahmen dieser Beschreibung eine Einheit bezeichnet, die in der Literatur auch "Voter" genannt wird, und welche fehlerhafte Nachrichten entdeckt und den Fehler maskiert [Kopetz, s.o., Seite 157].

Aus dem Dokument WO2013/123543A ist ein Echtzeitcomputersystem bekannt, das aus einer Mehrzahl von selbstprüfenden Systemkomponenten und einer Nachrichtenverteilereinheit zur Vermittlung von Nachrichten zwischen den Systemkomponenten auf der Basis eines festgelegten zeitgesteuerten Zeitplans besteht.
Aus dem Dokument HERMANN KOPETZ: "The Time-Triggered Architecure", PROCEEDNGS OF THE IEEE, IEEE, NEW YORK, US, Bd. 91, Nr. 1, 1 Januar 2003 (2003-01-01), XP011065101, ISSN: 0018-9219, ist ein Mehrknoten-Rechnersystem bekannt, bei dem die Nachrichten zwischen den Rechnerknoten unter Verwendung eines a-priori festgelegten TDMA-Schema versendet werden.
Ein Fehler in den Nutzinformationen (payload) einer von einer nicht selbstprüfenden FCU gesendeten Nachricht kann von konventionellen zeitgesteuerten Verteilereinheiten, wie sie am Markt angeboten werden, nicht erkannt werden.

Eine Aufgabe der Erfindung liegt in der Schaffung einer zeitgesteuerten Verteilereinheit in einem verteilten Computersystem, welche bei vertretbarem Aufwand auch in komplexen Systemen mit sehr hohen Sicherheitsanforderungen rasch entscheiden können, ob sicherheitsrelevante Fehler vorliegen. Ebenso ist es eine Aufgabe der vorliegenden Erfindung, ein verteiltes Echtzeit-Computersystem mit einer entsprechenden Verteilereinheit zu schaffen.

Die genannten Aufgaben werden mit einer Verteilereinheit der eingangs genannten Art gelöst, bei welcher erfindungsgemäß die Verteilereinheit als selbstprüfende Funktionseinheit ausgeführt ist und Eingangskanäle zum Empfang von zeitgesteuerten periodischen Eingangsnachrichten von im Datenfluss vorgelagerten Knotenrechnern und Ausgangskanäle zum Senden von zeitgesteuerten periodischen Ausgangsnachrichten an die im Datenfluss nachgelagerten Knotenrechner aufweist und in der Verteilereinheit ein Komparator vorgesehen ist, der dazu eingerichtet ist, mittels einer "einfachen" Software die in den Eingangsnachrichten enthaltene Nutzinformationen zu analysieren und zu entscheiden, ob Ausgangsnachrichten ausgegeben werden und, falls ja, welche Nutzinformationen in den Ausgangsnachrichten enthalten sind.

Dabei ist es zweckmäßig, wenn in einer TMR Konfiguration zur Maskierung eines in einer Komponente, welche der Verteilereinheit vorgelagert ist, auftretenden Hardwarefehlers zumindest eine, durch einen Komparator erweiterte Verteilereinheit dazu eingerichtet ist, die "Auswahl" über die von den vorgelagerten Knotenrechnern eintreffenden Nachrichten vorzunehmen.

Auch ist es empfehlenswert, wenn die Verteilereinheit dazu eingerichtet ist, die zeitgesteuerte Kommunikation entsprechend dem TTEthernet Standard auszuführen.

Um auch einen (fail-silent) Fehler der durch einen Komparator erweiterten Verteilereinheit tolerieren zu können, ist es sinnvoll, in einer TMR Konfiguration zur Maskierung des Ausfalls einer durch einen Komparator erweiterten Verteilereinheit eine redundante Verteilereinheit vorzusehen.

Die vorliegende Erfindung löst die Aufgabe, wie sich durch die Kombination mehrerer Knotenrechner, die nicht selbstprüfenden FCUs sind, mit einer durch einen Komparator ergänzten zeitgesteuerten Verteilereinheit, die eine selbstprüfende FCU in Bezug auf Hardwarefehler ist, eine abstrakte Funktionseinheit schaffen lässt, deren Verhalten vom Standpunkt der Sicherheit einer selbstprüfenden FCU entspricht. Die Verteilereinheit ist in Bezug auf Hardwarefehler als selbstprüfende FCU realisiert, um bei Auftreten eines Hardwarefehlers in der Verteilereinheit die Verarbeitung zu unterbrechen und die Ausgabe von Nachrichten zu unterbinden

Erfindungsgemäß überprüft der Komparator der Verteilereinheit mit einer anwendungsspezifischen einfachen Software, ob die Nutzinformationen in den über die Verteilereinheit transportierten Daten ein anwendungsspezifisches sicherheitsrelevantes Kriterium verletzen und unterbindet die Ausgabe von Nachrichten, die ein solches anwendungsspezifisches sicherheitsrelevantes Kriterium verletzen. Somit bilden die nicht selbstprüfenden Knotenrechner und eine mit einem Komparator erweiterte selbstprüfende Verteilereinheit, über die alle sicherheitsrelevanten Ausgabenachrichten der Knotenrechner transportiert werden müssen vom Standpunkt der Sicherheit eine abstrakte selbstprüfende Funktionseinheit.

Die Erfindung samt weiterer Einzelheiten und Vorteile wird im Folgenden unter Bezugnahme auf die Zeichnung näher erläutert, in welcher zeigen:
Fig. 1 den Datenfluss in einem Echtzeitsystem nach dem Stand der Technik,
Fig. 2. den Datenfluss in einem nach dem Stand der Technik Echtzeitsystem, wobei der Empfänger die sicherheitsrelevanten Kriterien mit Hilfe eines Komparators überprüft,
Fig. 3. den Datenfluss in einem Echtzeitsystem gemäß der Erfindung, wobei die Nachrichtenverteilereinheit die sicherheitsrelevanten Kriterien mit einem Komparator überprüft,
Fig. 4. den Datenfluss in einem Echtzeitsystem, wobei die Nachrichtenverteilereinheit die sicherheitsrelevanten Kriterien mit Hilfe eines Komparators überprüft, welcher Komparator auch dynamische Prozessinformationen berücksichtigt,
Fig. 5 die Struktur eines TMR (Triple Modular Redundancy)-Systems nach dem Stand der Technik, und
Fig. 6 die Struktur eines TMR Systems nach der Erfindung, bei welchem die Verteilereinheiten durch Komparatoren erweitert sind.

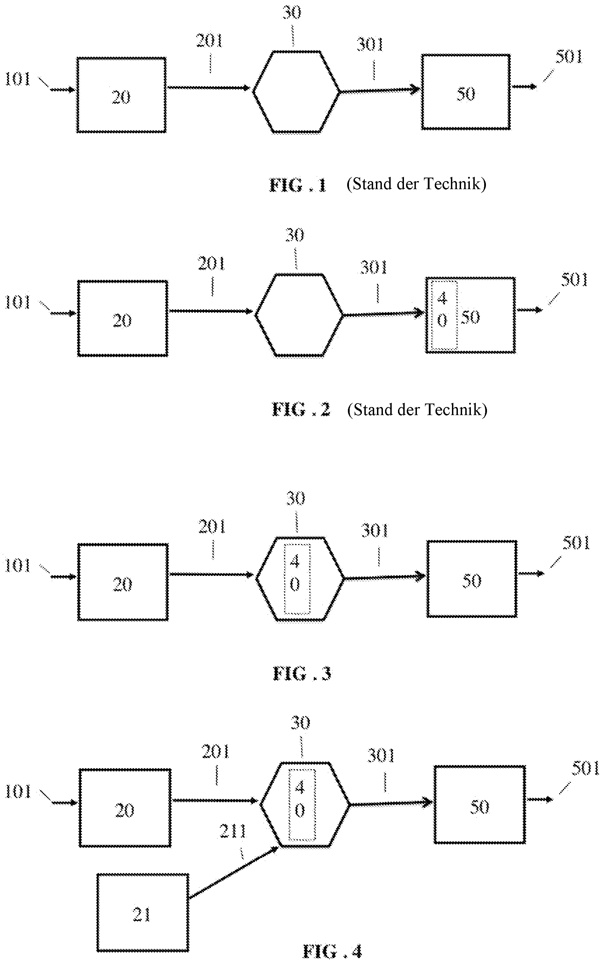

Fig. 1 zeigt die Struktur eines gerichteten Datenflusses in einem Verarbeitungszyklus bei einem Echtzeitsystem nach dem Stand der Technik. Das Verhalten der meisten Echtzeitsysteme ist durch einen periodischen Ablauf von Verarbeitungszyklen gekennzeichnet. Der gerichtete Datenfluss eines periodischen Verarbeitungszyklusses beginnt mit der Erfassung der Eingabedaten, der anschließenden Verarbeitung der erfassten Daten durch einen oder mehrere Knotenrechner und endet mit der Ausgabe der Stellwerte an die Aktuatoren. Ein Knotenrechner 20 übernimmt die auf dem Kommunikationskanal 101 angelieferten Nachrichten von einem im Datenfluss vorgelagerten Knotenrechner und sendet seine Ergebnisnachrichten auf dem Kommunikationskanal 201 an eine im Datenfluss nachgelagerte zeitgesteuerte Verteilereinheit 30. Die zeitgesteuerte Verteilereinheit 30 transportiert eine vom dem im Datenfluss vorgelagerten Knotenrechner 20 eintreffende Nachricht rechtzeitig über einen Kommunikationskanal 301 an einen im Datenfluss nachgelagerten Knotenrechner 50. Eine auf dem Kommunikationskanal 201 nicht zeitgerecht eintreffende Nachricht wird von der zeitgesteuerten Verteilereinheit 30 verworfen. Der Knotenrechner 50 sendet seine Ergebnisnachrichten über einen Kommunikationskanal 501 an die folgenden nachgelagerten Verteilereinheit oder an einen Aktuator.

Es ist vorteilhaft, wenn die Verteilereinheit 30 das standardisierte zeitgesteuerte TTEthernet Protokoll realisiert [SAE Standard AS6802 von TT Ethernet. URL: http://standards.sae.org/as6802].

Fig. 2 zeigt im Wesentlichen die gleichen Blöcke wie Fig. 1 und gleichfalls bei einem Echtzeitsystem nach dem Stand der Technik, jedoch mit einem Komparator 40 im Knotenrechner 50. Dieser Komparator 40 überprüft mit einer "einfachen" Software ob ein anwendungsspezifisches sicherheitsrelevantes Kriterium in den Nutzinformationen der eintreffenden Nachricht verletzt wird. Falls dies der Fall ist, wird die vom im Datenfluss vorgelagerten Knotenrechner 20 auf dem Kommunikationskanal 201 eintreffende Nachricht von dem Komparator 40 verworfen.

Auch Fig. 3 zeigt die Struktur eines gerichteten Datenflusses in einem Verarbeitungszyklus im Wesentlichen die gleichen Blöcke wie Fig. 1 bzw. Fig. 2, jedoch gemäß der Erfindung mit einem Komparator 40 in der Verteilereinheit 30. Der Komparator überprüft mit einer "einfachen" Software ob ein anwendungsspezifisches sicherheitsrelevantes Kriterium in den Nutzinformationen der eintreffenden Nachricht verletzt wird. Sollte dies der Fall sein, wird die Nachricht von dem Komparator 40 in der Verteilereinheit 30 verworfen. Der nachgelagerte Knotenrechner 50 bekommt somit keine Nachricht, da die Funktionseinheit, gebildet aus dem Knotenrechner 20 und der Verteilereinheit 30 in Bezug auf sicherheitsrelevante Fehler als eine abstrakte Funktionseinheit betrachtet werden kann, deren Verhalten vom Standpunkt der Sicherheit jenem einer selbstprüfenden FCU entspricht.

Fig. 4 zeigt im Sinne der Erfindung die Struktur eines gerichteten Datenflusses in einem Verarbeitungszyklus mit einem Komparator 40 in der Verteilereinheit 30, wobei die Verteilereinheit eine zusätzliche Nachricht eines Knotenrechners 21 betreffend den dynamischen Zustand des Systems auf dem Kommunikationskanal 211 erhält. Der Komparator überprüft mit einer "einfachen" Software die Nutzinformationen der auf dem Kommunikationskanal 201 erhaltenen Nachricht unter Berücksichtigung der auf dem Kommunikationskanal 211 erhaltenen Informationen und gibt keine Nachricht auf dem Kommunikationskanal 301 aus, falls die Überprüfung eine Verletzung eines anwendungsspezifisches sicherheitsrelevantes Kriteriums ergibt.

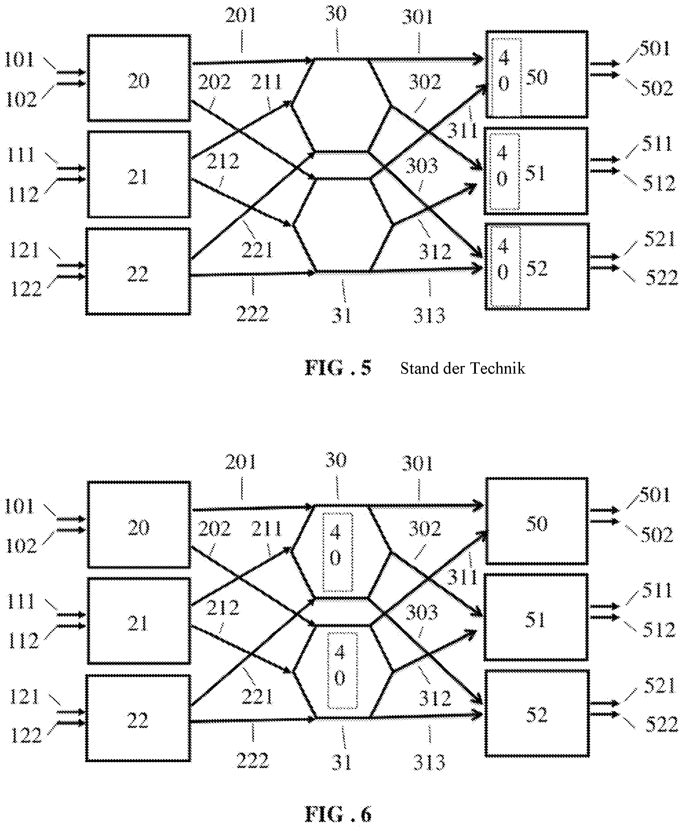

Fig. 5 zeigt die Struktur einer TMR Konfiguration nach dem Stand der Technik (Kopetz, s.o., Seite 157) zur Maskierung von Hardwarefehlern in einem verteilten Echtzeitsystem. Drei replika-deterministische Instanzen 20, 21 und 22 des in Fig. 1 angeführten Knotenrechners 20 verarbeiten parallel die eintreffenden Eingangsdaten. Im fehlerfreien Fall empfängt der Knotenrechner 20 zwei identische redundante Eingangsnachrichten über die Kommunikationskanäle 101 und 102 und sendet die Ergebnisnachrichten über den Kommunikationskanal 201 an die Verteilereinheit 30 und über den Kommunikationskanal 202 an die redundante Verteilereinheit 31. Analog empfängt der Knotenrechner 21 zwei identische redundante Eingangsnachrichten über die Kommunikationskanäle 111 und 112 und sendet die Ergebnisnachrichten über den Kommunikationskanal 211 an die Verteilereinheit 30 und über den Kommunikationskanal 212 an die redundante Verteilereinheit 31. Analog empfängt der Knotenrechner 22 zwei identische redundante Eingangsnachrichten über die Kommunikationskanäle 121 und 122 und sendet die Ergebnisnachrichten über den Kommunikationskanal 221 an die Verteilereinheit 30 und über den Kommunikationskanal 222 an die redundante Verteilereinheit 31.

Im fehlerfreien Fall sendet die Verteilereinheit 30 die von den drei Knotenrechnern 20, 21 und 22 erhaltenen identischen Nachrichten über den Kommunikationskanal 301 an den Knotenrechner 50, über den Kommunikationskanal 302 an den replizierten Knotenrechner 51 und über den Kommunikationskanal 303 an den replizierten Knotenrechner 52. Analog sendet die Verteilereinheit 31 die von den drei Knotenrechnern 20, 21 und 22 erhaltenen Nachrichten über den Kommunikationskanal 311 an den Knotenrechner 50, über den Kommunikationskanal 312 an den replizierten Knotenrechner 51 und über den Kommunikationskanal 313 an den replizierten Knotenrechner 52.

Im fehlerfreien Fall erhält jeder der drei Knotenrechner 50, 51 und 52 sechs redundante Kopien einer Nachricht. Im ersten Schritt wird eine der beiden redundanten Kopien einer Nachricht von einem Knotenrechner verworfen. Die verbleibenden drei Nachrichten werden vom Komparator 40 verglichen und es wird nur eine Nachricht mit jenen Nutzinformationen weitergeleitet, die mindesten in zwei der drei Nachrichten ident sind. Die Ergebnisdaten werden über redundante Ausgangskanäle an die nachgelagerten Knotenrechner weitergeleitet. Diesen Vorgang, der von dem Komparator ausgeführt wird, bezeichnet man als die "Auswahl" (engl. "Voting") über die eintreffenden redundanten Nachrichten. So gibt der Rechnerknoten 50 die Ergebnisnachrichten über die Kommunikationskanäle 501 und 502, der Rechnerknoten 51 über die Kommunikationskanäle 511 und 522, und der Rechnerknoten 50 über die Kommunikationskanäle 521 und 522 an die im Datenfluss nachgelagerte Verteilereinheit aus. Durch die redundante TMR Konfiguration wird der Ausfall eines drei Knotenrechner 20, 21 oder 22 und/oder einer der beiden Verteilereinheiten 30 oder 31 toleriert.

Erfindungsgemäß wird in einem TMR System durch die Verlagerung des Komparators 40 in die Verteilereinheiten entsprechend Fig. 6 der Nachrichtenverkehr zwischen den Verteilereinheiten 30 und 31 und den Knotenrechnern 50, 51 und 52 wesentlich reduziert, da der Komparator 40 in analoger Weise zu Fig. 5 entscheidet, welcher der in den Eingangsnachrichten enthaltenen Nutzinformationen in die Ausgangsnachricht übernommen wird. Somit müssen die Verteilereinheiten 30, 31 der Fig. 1 auf einer selbstprüfenden Hardware mit "einfacher" Software realisiert werden. Anstelle von jeweils sechs Nachrichten werden nur mehr jeweils zwei Nachrichten von den Verteilereinheiten an die Knotenrechner 50, 51 und 52 weitergeleitet. Die Knotenrechner 50, 51 und 52 werden vereinfacht, da in diesen Knotenrechnern keine Auswahl der redundanten Nachrichten erfolgen muss.

Man kann, falls erforderlich, z.B. bei Anwendungen in der Raumfahrt, die Zuverlässigkeit weiter verbessern, wenn man mehr als die in Fig. 6 gezeigten Komponenten einsetzt, beispielsweise vier eingangs- und ausgangsseitige Knotenrechner und drei Verteilereinheiten.

Die offenbarte Erfindung hat eine große wirtschaftliche Bedeutung, da sie es ermöglicht, in sicherheitskritischen Anwendungen fehlertolerante Computersysteme mit konventionellen Knotenrechnern und dedizierten, mit einem Komparator erweiterten selbstprüfenden Verteilereinheiten zu realisieren.

## Patentansprüche

1. Zeitgesteuerte Verteilereinheit (30, 31) zur Verteilung von Nachrichten in einem verteilten Computersystem für sicherheitskritische Anwendungen, **dadurch gekennzeichnet, dass** die Verteilereinheit (30) als selbstprüfende Funktionseinheit ausgeführt ist und Eingangskanäle (201 ... 222) zum Empfang von zeitgesteuerten periodischen Eingangsnachrichten von im Datenfluss vorgelagerten Knotenrechnern (20, 21, 22) und Ausgangskanäle (301 ... 313) zum Senden von zeitgesteuerten periodischen Ausgangsnachrichten an die im Datenfluss nachgelagerten Knotenrechner (50, 51, 52) aufweist und in der Verteilereinheit ein Komparator (40) vorgesehen ist, der dazu eingerichtet ist, mittels einer "einfachen" Software die in den Eingangsnachrichten enthaltene Nutzinformationen zu analysieren und zu entscheiden, ob Ausgangsnachrichten ausgegeben werden und, falls ja, welche Nutzinformationen in den Ausgangsnachrichten enthalten sind.

2. Zeitgesteuerte Verteilereinheit nach Anspruch 1, **dadurch gekennzeichnet, dass** in einer TMR Konfiguration zur Maskierung eines in einer Komponente, welche der Verteilereinheit vorgelagert ist, auftretenden Hardwarefehlers zumindest eine, durch einen Komparator (40) erweiterte Verteilereinheit (30) dazu eingerichtet ist, die "Auswahl" über die von den vorgelagerten Knotenrechnern (20, 21, 22) eintreffenden Nachrichten vorzunehmen.

3. Zeitgesteuerte Verteilereinheit (30, 31) nach Anspruch 1, **dadurch gekennzeichnet, dass** die Verteilereinheit (30, 31) dazu eingerichtet ist, die zeitgesteuerte Kommunikation entsprechend dem TTEthernet Standard auszuführen.

4. Verteiltes Echtzeit-Computersystem mit zumindest einer zeitgesteuerten Verteilereinheit nach Anspruch 3, **dadurch gekennzeichnet, dass** in einer TMR Konfiguration zur Maskierung des Ausfalls einer durch einen Komparator (40) erweiterten Verteilereinheit (30) eine redundante Verteilereinheit (31) vorgesehen ist.

## Claims

1. A time-triggered distribution unit (30, 31) for distributing messages in a distributed computer system for safety-critical applications, **characterized in that** the distribution unit (30) is embodied as a self-checking functional unit and has input channels (201 ... 222) for receiving time-triggered periodic input messages from front-end computers (20, 21, 22) upstream in the data flow and output channels (301 ... 313) for transmitting time-triggered periodic output messages to the front-end computers (50, 51, 52) downstream in the data flow and provided in the distribution unit is a comparator (40) that is designed to analyze, by means of "simple" software, the useful information contained in the input messages and to decide whether output messages are output, and, if so, which useful information is contained in the output messages.

2. The time-triggered distribution unit according to claim 1, **characterized in that**, in a TMR configuration for masking a hardware error occurring in a component that is upstream of the distribution unit, at least one distribution unit (30) expanded by a comparator (40) is designed to undertake the "selection" using the messages arriving from the upstream front-end computers (20, 21, 22).

3. The time-triggered distribution unit (30, 31) according to claim 1, **characterized in that** the distribution unit (30, 31) is designed to execute the time-controlled communication according to the TTEthernet Standard.

4. A distributed real-time computer system having at least one time-triggered distribution unit according to claim 3, **characterized in that** a redundant distribution unit (31) is provided in a TMR configuration for masking the failure of a distribution unit (30) expanded by a comparator (40).

## Revendications

1. Unité de répartition (30, 31) à commande temporelle pour la répartition de messages dans un système informatique réparti pour des applications de haute sécurité, **caractérisée par le fait que** l'unité de répartition (30) est réalisée sous forme d'unité fonctionnelle à auto-vérification et présente des canaux d'entrée (201 ... 222) pour la réception de messages d'entrée périodiques à commande temporelle provenant d'ordinateurs de noeud (20, 21, 22) situés en amont dans le flux de données et des canaux de sortie (301 ... 313) pour l'envoi de messages de sortie périodiques à commande temporelle aux ordinateurs de noeud (50, 51, 52) situés en aval dans le flux de données et, dans l'unité de répartition, un comparateur (40) est prévu, lequel est conçu pour analyser au moyen d'un logiciel « simple » les informations utiles contenues dans les messages d'entrée et pour décider si des messages de sortie sont émis et, si oui, quelles informations utiles sont contenues dans les messages de sortie.

2. Unité de répartition à commande temporelle selon la revendication 1, **caractérisée par le fait que**, dans une configuration à triple redondance modulaire (TMR) pour le masquage d'un défaut de matériel se produisant dans un composant, qui est situé en amont de l'unité de répartition, au moins une unité de répartition (30) étendue par un comparateur (40) est conçue pour faire le « choix » au moyen des messages arrivant depuis les ordinateurs de noeud situés en amont (20, 21, 22).

3. Unité de répartition (30, 31) à commande temporelle selon la revendication 1, **caractérisée par le fait que** l'unité de répartition (30, 31) est conçue pour réaliser la communication à commande temporelle conformément à la norme TTEthernet.

4. Système informatique en temps réel réparti comportant au moins une unité de répartition à commande temporelle selon la revendication 3, **caractérisée par le fait que**, dans une configuration TMR pour le masquage de la défaillance d'une unité de répartition (30) étendue par un comparateur (40), une unité de répartition redondante (31) est prévue.
